# EUROPEAN PATENT APPLICATION

(11) **EP 1 998 560 A1**
(43) Date of publication of application: **03.12.2008**
(21) Application number: 07739316.3
(22) Date of filing: 22.03.2007
(51) Int. Cl.: H04N 5/335, H04N 5/232, H04N 101/00

(54) **AUTOMATIC PHASE ADJUSTING APPARATUS**

(30) Priority: 23.03.2006 JP 2006080296; 24.04.2006 JP 2006118920
(71) Applicant: Panasonic Corporation, Kadoma-shi Osaka 571-8501 (JP)
(72) Inventor: OGAWA, Mayu c/o Matsushita Electric Industrial Co., Ltd. IP Rights Operations Co., Chuo-ku Osaka 540-6207 (JP); TOKUMOTO, Junji c/o Matsushita Electric Industrial Co., Ltd. I.P.R.O.C., Chuo-Ku Osaka 540-6207 (JP); OTANI, Mitsuhiko c/o Matsushita Electric Industrial Co., Ltd. I.P.R.O.C., Chuo-Ku Osaka 540-6207 (JP); FUJII, Toshiya c/o Matsushita Electric Industrial Co., Ltd. I.P.R.O.C., Chuo-Ku Osaka 540-6207 (JP); OGAWA, Masahiro c/o Matsushita Electric Industrial Co., Ltd. I.P.R.O.C., Chuo-Ku Osaka 540-6207 (JP); NAKAMURA, Kenji c/o Matsushita Electric Industrial Co., Ltd. I.P.R.O.C., Chuo-Ku Osaka 540-6207 (JP); NISHIGAKI, Mika c/o Matsushita Electric Industrial Co., Ltd. I.P.R.O.C., Chuo-Ku Osaka 540-6207 (JP); YAMAMOTO, Shinji c/o Matsushita Electric Industrial Co., Ltd. I.P.R.O.C., Chuo-Ku Osaka 540-6207 (JP); FURUTAKE, Masaaki c/o Matsushita Electric Industrial Co., Ltd. I.P.R.O.C., Chuo-Ku Osaka 540-6207 (JP)
(74) Representative: Urner, Peter
(86) International application number: PCT/JP2007/055873
(87) International publication number: WO 2007/119483

(57) **Abstract**

A digital imaging signal obtained by converting an image data obtained by an imaging element into a digital value for each pixel is inputted to an automatic phase adjusting apparatus, and the automatic phase adjusting apparatus adjusts phases of pulses to be used for imaging based on the inputted digital imaging signal. The automatic phase adjusting apparatus is provided with a brightness level detector for calculating a brightness level of the digital imaging signal for a plurality of pixels in a first pixel region, a variability calculator for calculating a variability value which indicates signal variability of the digital imaging signal for each pixel for a plurality of pixels in a second pixel region, and a timing adjuster for adjusting the phases of the pulses in accordance with calculation results obtained by the brightness level detector and the variability calculator.

## Description

### FIELD OF THE INVENTION

The present invention relates to an automatic phase adjusting apparatus which adjusts a phase (timing) of a pulse used for obtaining an image in a digital camera, and a digital camera in which the automatic phase adjusting apparatus is embedded.

### BACKGROUND OF THE INVENTION

A digital camera (digital still camera, digital video camera, camera-attached mobile phone, and the like) is a camera configured such that an analog imaging signal obtained by an imaging element, such as CCD or MOS sensor, is converted into a digital imaging signal, and the obtained digital imaging signal is subjected to predetermined processing and then recorded. In order to photograph a photographic subject using the imaging element, a pulse for driving the imaging element, a pulse for detecting a signal level, and the like, are necessary. It is difficult to adjust phases (timings) of these pulses when the hardware is designed due to some variability attributable to a manufacturing process. Therefore, it is conventionally adopted that an engineer performs the phase adjustment after the manufacturing process, and information indicating the adjustedphases is stored in a memory region so that the adjusted phases are set.

The Patent Document 1 recites the conventional technology relating to the present invention. Accordint to the Patent Domument 1, an image is fetched in a minimal exposure time, and the phases are adjusted so that a noise component is minimized, in other words, a high frequency component is

### DISCLOSURE OF THE INVENTION

### PROBLEM TO BE SOLVED BY THE INVENTION

As a conventional method adopted in order to manufacture a digital camera, the phases of the pulses of the imaging element were adjusted after it was manufactured, and information obtained from the adjustment was set in all of the digital cameras manufactured in the same manufacturing process. However, the adjusting method could not flexibly respond to the characteristic variability of the imaging element. Therefore, the characteristic variability led to the variability of an imaging signal, which generated some shift from an optimal point. As result, there were such possible disadvantages that a maximum signal level was not obtained, and the S/N ratio was deteriorated.

In the field of a hospital-use camera, it may be necessary to exchange the imaging element after the digital camera is manufactured. When the imaging element is replaced with another imaging element, the phases of the pulses which drive the new imaging element are inevitably changed. Therefore, the phase adjustment is performed again. Further, signal delays are generated in a cable which connects the imaging element to a signal processor. The readjustment of the phases becomes necessary in the case where a delay amount changes due to the exchange of a cable, or the like. In view of the necessity of the readjustment of phases by an engineer, there is usually a strong reluctance to replace the imaging element or the connection cable.

According to the method recited in the Patent Document 1, the characteristics of the pulses to be adjusted are not taken into account, and optimal phases were obtained by the same method for a plurality of pulses. Therefore, the phase adjustment cannot be very accurate.

The present invention was made in order to solve the foregoing problems, and a main object thereof is to automatically and accurately adjust the phases of the pulses used in imaging operation without any manual readjustment.

### MEANS FOR SOLVING THE PROBLEMS

In order to solve the foregoing problems, an automatic phase adjusting apparatus according to the present invention is an automatic phase adjusting apparatus wherein a digital imaging signal obtained when an image data obtained by an imaging element is converted into a digital value for each pixel is inputted, and phases of pulses used for an imaging operation are adjusted based on the inputted digital imaging signal, comprising:
a brightness level detector for calculating a brightness level of the digital imaging signal in relation to a plurality of pixels in a first pixel region;
a variability calculator for calculating a variability value indicating signal variability of the digital imaging signals for each pixel in relation to a plurality of pixels in a second pixel region; and
a timing adjuster for adjusting the phases of the pulses in accordance with calculation results obtained by the brightness level detector and the variability calculator.

An automatic phase adjusting method according to the present invention is an automatic phase adjusting method for adjusting at least one of phases of a first pulse for detecting a level of an imaging signal outputted from an imaging element, a second pulse for detecting a signal level used as a reference in correlated double sampling, and an AD clock signal inputted to an AD converter, including:
a step of detecting a first phase where a brightness level is maximized by changing the phase of the first pulse in a state where the second pulse and the AD clock signal remain fixed to respective initial values; and
a step of setting the detected first phase as the phase of the first pulse.

### EFFECT OF THE INVENTION

According to the present invention, phases of pulses (DS1, DS2 andADCLK) outputted from TG (timing generator) , which are used in an imaging operation, can be automatically adjusted. Therefore, the phases of the pulses outputted from the TG can be automatically adjusted in the case where the characteristics of the imaging element change because the imaging element itself is exchanged, the imaging element is influenced by some external factors (temperature change, voltage change and the like) or the imaging element is deteriorated over time, and a signal delay amount from the imaging element to the signal processor changes. Further, in the manufacturing process, the phases of the pulses can be automatically adjusted to be optimal in accordance with individual variability of imaging elements.

Further, a high accuracy can be achieved in the automatic adjustment because the phases of the pulses are separately adjusted according to individual methods adopted in view of the characteristics of the respective pulses.

### BRIEF DESCRIPTION OF THE DRAWINGS

Fig. 1 is a block diagram illustrating an overall constitution of a digital camera according to a preferred embodiment of the present invention.
Fig. 2 is a drawing wherein a signal component outputted from an imaging element is chronologically illustrated.
Fig. 3A is a flow chart illustrating an overall phase adjusting operation according to the present invention.
Fig. 3B is a table showing set values of pulses when they are adjusted according to the present invention.
Fig. 4 is a timing chart of a signal component used for the phase adjustment of DS2 according to the present invention.
Fig. 5 is a flow chart illustrating details of the phase adjustment of DS2 according to the present invention.
Fig. 6 is a timing chart of a signal component used for the phase adjustment of DS1 according to the present invention.
Fig. 7 is a flow chart illustrating details of the phase adjustment of DS1 according to the present invention.
Fig. 8A is a timing chart of a signal component used for the phase adjustment of ADCLK according to the present invention.
Fig. 8B is an enlarged view of S section shown in Fig. 8A.
Fig. 9 is a flow chart illustrating details of the phase adjustment of ADCLK according to the present invention.
Fig. 10 is a block diagram illustrating an overall constitution of a digital camera according to a modified embodiment 1 of the present invention.
Fig. 11A is a drawing wherein a signal component outputted from an imaging element in the case where a signal quality is poor is chronologically illustrated.
Fig. 11B is an enlarged view of F section shown in Fig. 11A.
Fig. 12 is an illustration of an adjustment range in the phase adjustment.
Fig. 13 is a drawing wherein optimal positions of DS1 and ADCLK are predicted by means of DS2.
Fig. 14 is a block diagram illustrating an overall constitution of a digital camera according to a modified embodiment of the present invention.
Fig. 15A is a drawing which shows a histogram output result according to the modified embodiment 5.
Fig. 15B is a drawing which shows a histogram output result according to the modified embodiment 5.
Fig. 15C is a drawing which shows a histogram output result according to the modified embodiment 5.
Fig. 16 is a block diagram illustrating an overall constitution of a digital camera according to a modified embodiment 6 of the present invention.
Fig. 17 is a drawing which shows a calculation region in a block memory according to the modified embodiment 6.
Fig. 18 is a block diagram illustrating an overall constitution of a digital camera according to a modified embodiment 7 of the present invention.

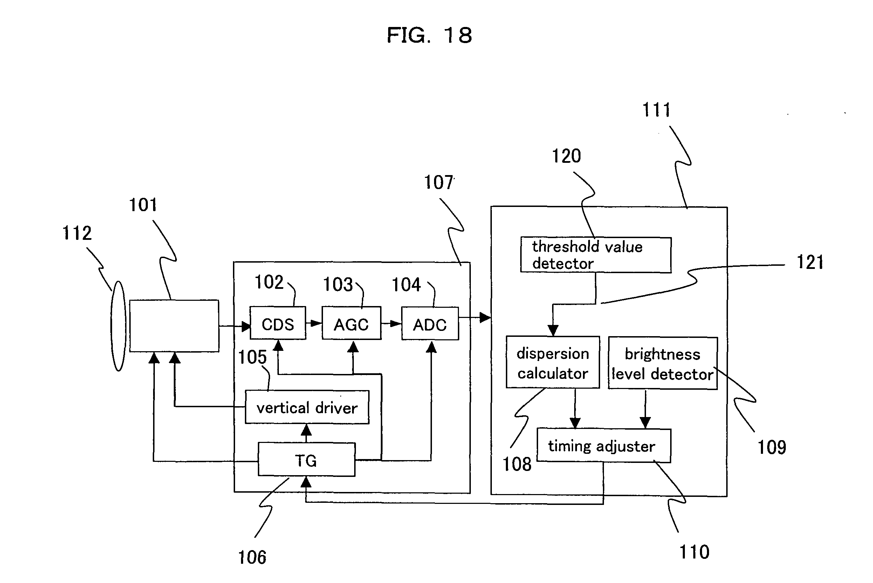

Fig. 18 is a drawing which shows an output result of a threshold value detector according to the modified embodiment 7.

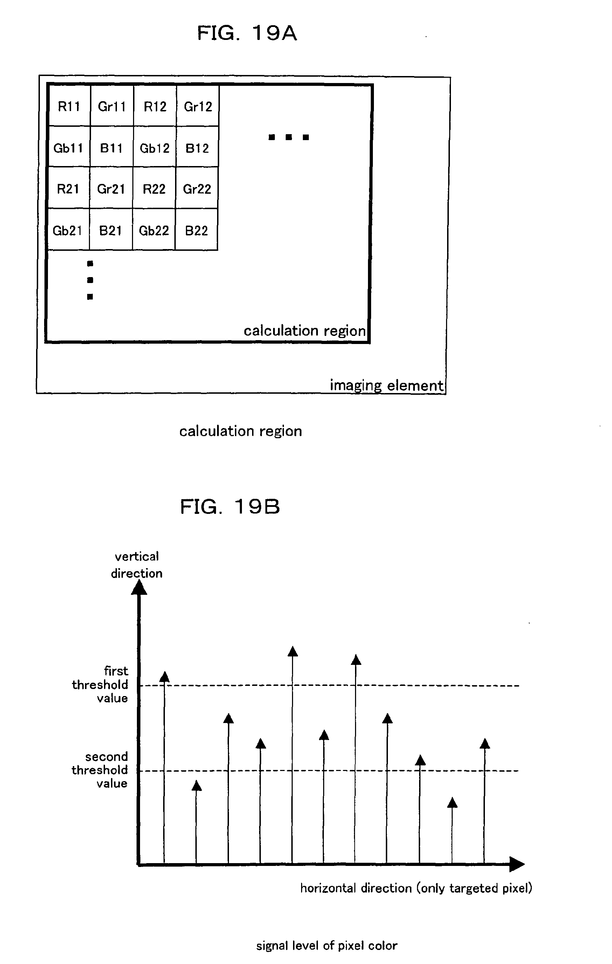

Fig. 19A is a drawing which shows a calculation region of the threshold value detector according to the modified embodiment 7.
Fig. 19B is a drawing which shows an output result of the threshold value detector according to the modified embodiment 7.

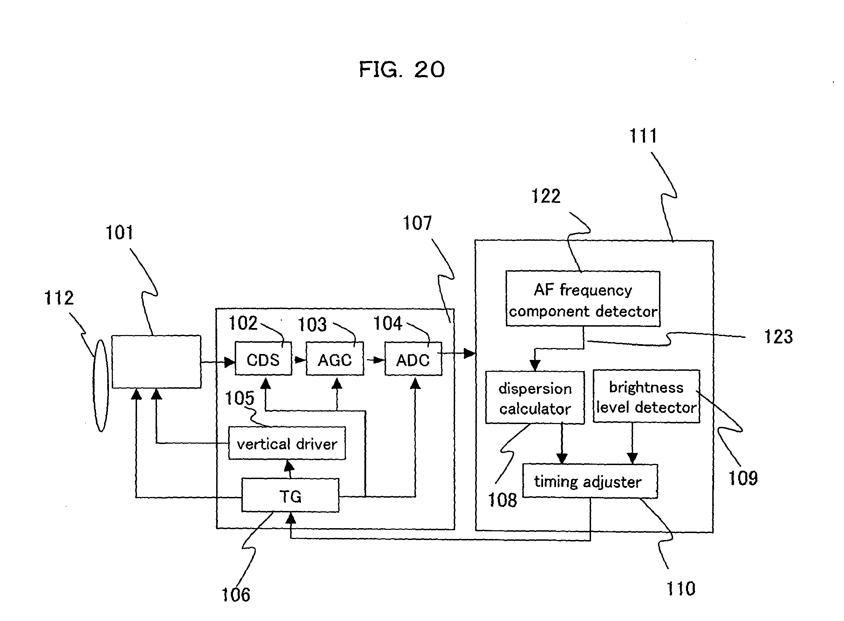

Fig. 20 is a block diagram illustrating an overall constitution of a digital camera according to a modified embodiment 8 of the present invention.

### DESCRIPTION OF REFERENCE SYMBOLS

- 101: imaging element
- 102: CDS
- 103: AGC
- 104: ADC (AD converter)
- 105: vertical driver
- 106: TG
- 107: analog frond end
- 108: dispersion calculator (variability calculator)
- 109: brightness level detector
- 110: timing adjuster
- 111: DSP
- 112: optical lens
- 113: defective pixel detector
- 114: memory
- 115: defective pixel address
- 116: histogram calculator
- 117: histogram calculation result
- 118: block memory circuit
- 119: block memory output result
- 120: threshold value detector
- 121: threshold value detection result
- 122: AF frequency component detector (frequency detector)
- 123: frequency component

### PREFERRED EMBODIMENT OF THE PRESENT INVENTION

Hereinafter, a preferred embodiment of the present invention is described referring to the drawings. The preferred embodiment described below is only an example, and the preferred embodiment and modified embodiments thereof can be variously modified.

### Device Configuration

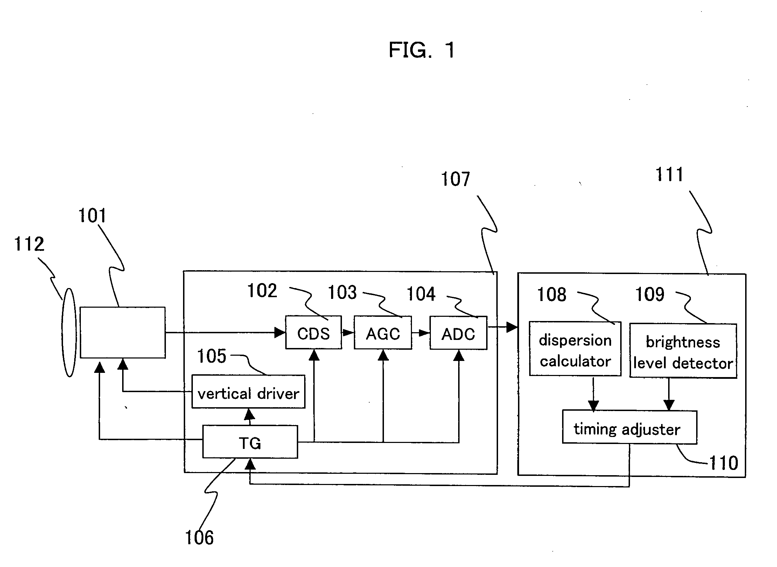

Fig. 1 is a block diagram illustrating an overall constitution of a digital camera according to the present invention. The digital camera according to the present preferred embodiment comprises an optical lens 112 which collects light of an object image on an imaging element 101, the imaging element 101 which images the object image obtained by the optical lens 112 (CCD is mentioned as an example in the following description), an analog front end 107 which converts an imaging signal (image data) outputted from the imaging element 101 into a digital imaging signal by providing predetermined processing thereto, and a DSP 111 which generates a video signal by providing predetermined processing (color correction, YC processing, and the like) to the digital imaging signal outputted from the analog front end 107. The imaging element 101 has a plurality of pixels, and an effective pixel region used for obtaining the object image and an OB (Optical Black) pixel region present in a periphery of the effective pixel region in an air-blocking state and used for the detection of an OB level constitute the plurality of pixels.

The analog front end 107 comprises a CDS (Correlated Double Sampling) 102 which performs correlated double sampling in order to determine a signal level of the analog imaging signal outputted from the imaging element 101, an AGC (Automatic Gain Control) 103 which amplifies a signal outputted from the CDS 102 by an adjustable gain, an AD converter (Analog Digital Converter) 104 which converts the signal amplified by the AGC 103 into a digital imaging signal, a TG (Timing Generator) 106 which generates a pulse used for obtaining an image, and a vertical driver 105 which outputs the pulse generated by the TG 106 to the imaging element 101.

The DSP 111 comprises constituent elements characterizing the present invention, which are a dispersion calculator 108 as a variability calculator capable of calculating the dispersion of the pixel-specific signal levels, a brightness level detector 109 which detects a brightness level by obtaining an average value of the signal levels of the pixels in a predetermined region, and a timing adjuster 110 which adjusts a phase (timing) of the pulse generated by the TG 106 based on calculation and detection results obtained by the dispersion calculator 108 and the brightness level detector 109. The signal outputted from the imaging element 101 is stored in a memory (SDRAM) not shown. The dispersion calculator 108 and the brightness level detector 109 read data of each pixel from SDRAM, and make calculation based on the obtained signal.

### Signal Component Outputted from Imaging Element

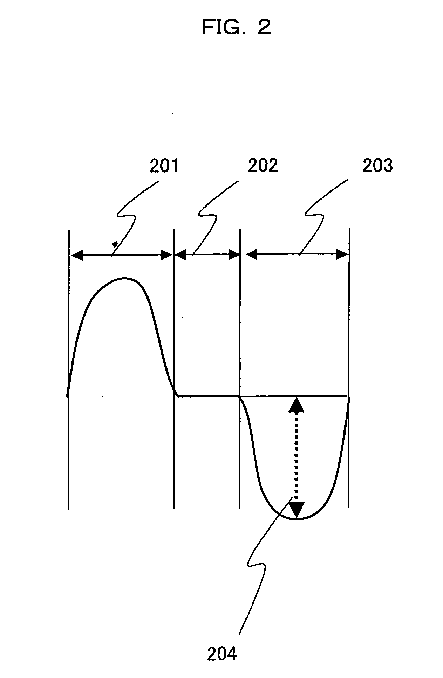

Fig. 2 is a drawing wherein the signal component outputted from the imaging element 101 is chronologically illustrated. As illustrated in Fig. 2, a reset period 201, a reference period 202 and a signal period 203 constitute the analog imaging signal.

The reset period is a period during which the imaging element 101 is reset. The reference period 202 is a period during which a reference voltage is outputted from the imaging element 101, and a signal which is used as a reference when the correlated double sampling is executed in the CDS 102 is detected. The signal period 203 is a period during which a signal voltage is outputted. The signal voltage showing a peak level during the signal period 203 and the reference voltage in the reference period 202 are sampled and a difference therebetween is obtained. As a result, a signal level 204 of the analog imaging signal can be obtained. In Fig. 2, a downward direction in the drawing is defined as a positive direction of the signal component.

### Flow Chart of Overall Operation

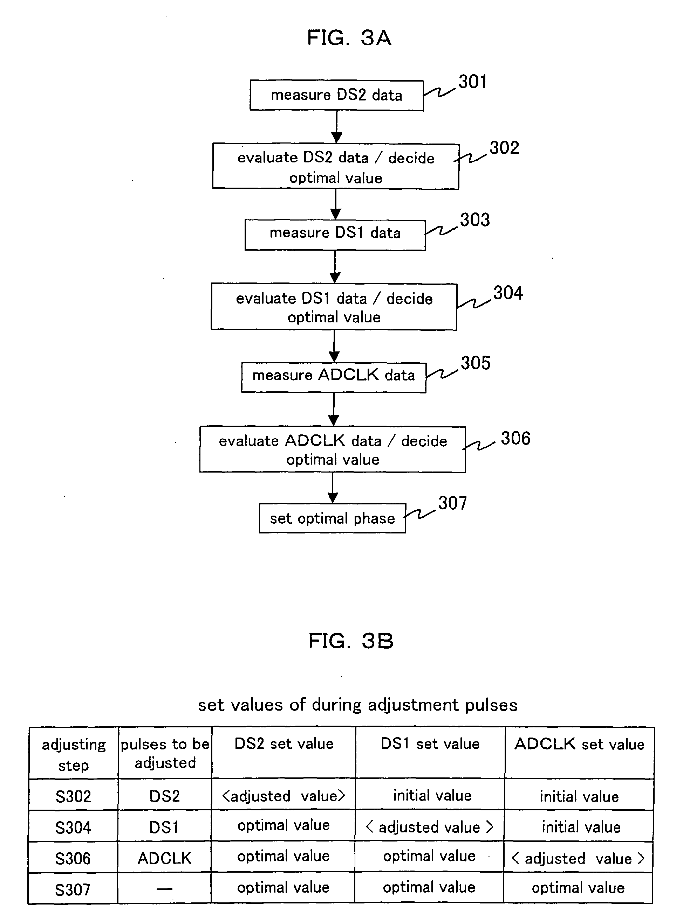

Fig. 3A is a flow chart illustrating an overall phase adjusting operation for each pulse according to the present preferred embodiment. The phase adjustment is performed mainly by the dispersion calculator 108, brightness level detector 109, and timing adjuster 110. The pulses to be adjusted are DS2, DS1 and ADCLK. The DS2 is a pulse for sampling the signal component showing its peak during the signal period 203. Therefore, it is desirable that the DS2 is phase-adjusted so that a positive edge thereof is coincident with a time when the signal component outputted from the imaging element 101 shows its peak. The DS1 is a pulse for sampling a signal component which becomes a reference in the correlated double sampling. Therefore, it is desirable that the DS1 is phase-adjusted so that a positive edge thereof is coincident with the center of the reference period. Here, the signal level obtained by the CDS 102 is nothing but a difference between the signal component showing its peak in the positive edge of the DS2 and the signal component in the reference period determined by the positive edge of the DS1. The ADCLK is a clock signal supplied to the ADC 104 and a pulse which determines a timing of the output of the signal outputted from the ADC 104. Therefore, when the phase of the ADCLK is inappropriate, not only a kickback with respect to analog occurs, which causes the variability in a result of AD conversion. Therefore, it is desirable to adjust the phase of the ADCLK so that the variability does not occur in the AD conversion result. Though the ADCLK may denote a timing signal for the AD conversion, it is assumed in the present invention that it is unnecessary to adjust the timing of the AD conversion.

In the present invention, first, the DS1 and the ADCLK are fixed to predetermined initial values, and data necessary for deciding the DS2 is measured while the phase of the DS2 is gradually being shifted from the initial value (S301). Then, the measured data is evaluated so that an optimal phase of the DS2 is decided (S302) . After the optimal phase of the DS2 is decided, the phase of the DS2 remains fixed to the decided optimal value and the ADCLK remains still fixed to its initial value, and then, data necessary for deciding the DS1 is measured while the phase of the DS1 is gradually being shifted from the initial value (S303). Then, the measured data is evaluated so that an optimal phase of the DS1 is decided (S304). After the optimal phases of the DS1 and the DS2 are decided, they remain fixed to the decided optimal values, and then, data necessary for deciding the ADCLK is measured while the phase of the ADCLK is gradually being shifted from the initial value (S305). The measured data is evaluated so that an optimal phase of the ADCLK is decided (S306). After the optimal phases of the DS1, DS2 and ADCLK are decided, information relating to the decided optimal phases is set in a register in the TG 106 (S307). Accordingly, the pulses having the optimal phases are generated.

The transition of the phase of each pulse during the adjustment is shown in the table of Fig. 3B. In the adjustment step S302, the DS1 and the ADCLK are fixed to the predetermined initial values, and only the DS2 to be adjusted changes. In the adjustment step S304, the DS2 remains fixed to the optimal value decided in S303, and the ADCLK remains still fixed to its initial value, and then, only the DS1 changes. In the adjustment step S306, the optimal values already decided are set in the DS1 and the DS2, and only the ADCLK changes. In the adjustment step S307, the optimal values are set in all of the pulses.

Below are described details of the respective steps.

### Adjustment of DS2

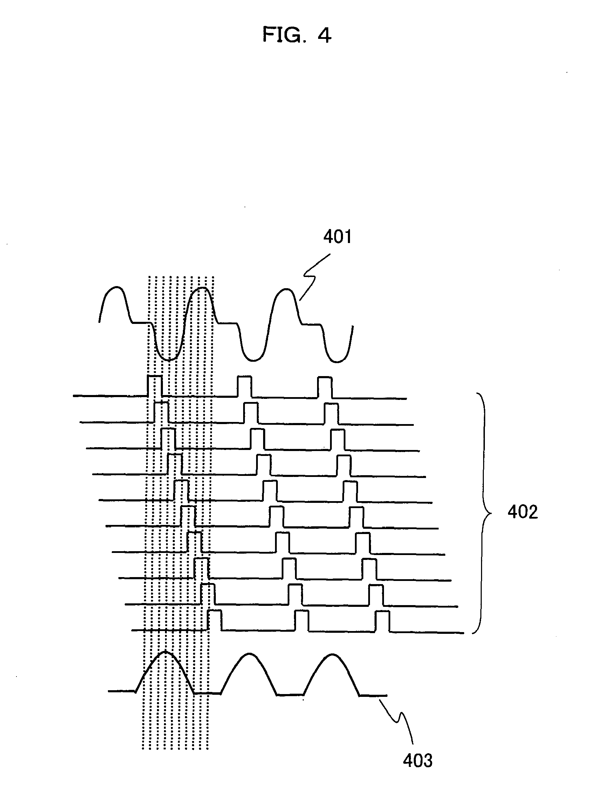

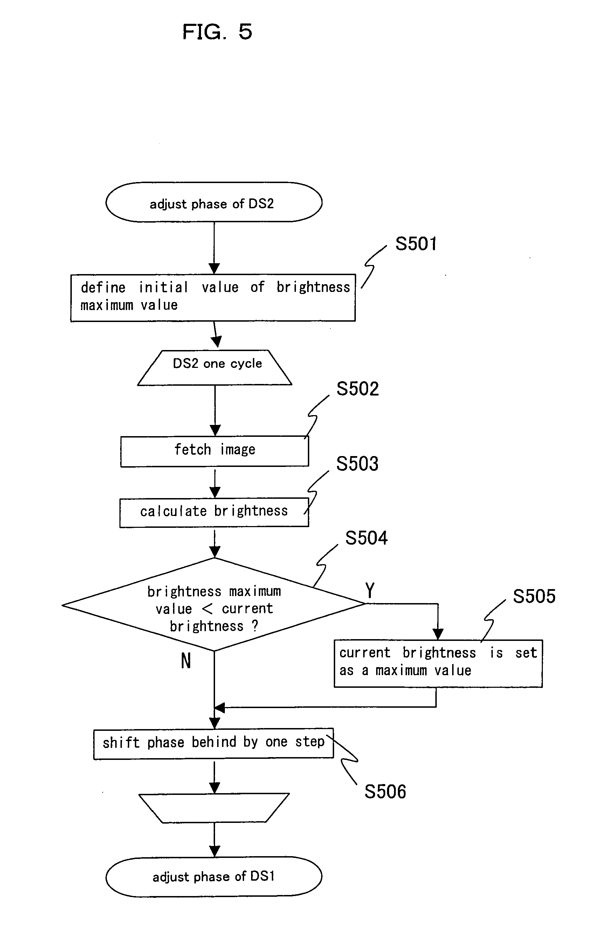

Referring to Figs. 4 and 5, the phase adjustment of the DS2 is described. Fig. 4 is a drawing illustrating a timing chart of the signal component used for the phase adjustment of the DS2. Fig. 5 is a drawing illustrating a detailed flow chat of the phase adjustment of the DS2. These drawings correspond to S301 and S302 shown in Fig. 3A.

In Fig. 4, 401 denotes an imaging element output signal, and 403 denotes a brightness signal. The brightness in the phase adjustment of the DS2 is defined as an average value of the signal levels in the respective pixels in a partial region or an entire region (referred to as DS2 detection region) of the effective pixel region of the imaging element 101. When the imaging element output signal 401 is illustrated as in the drawing, the brightness signal 403 takes convex shapes each having a peak when the DS2 is shifted as shown in 402 in the drawing while the DS1 and the ADCLK remain fixed. The phase shown when the brightness signal 403 marks its highest level is decided as the optimal phase of the DS2. The signal level of each pixel in the image data is, as described earlier, a difference between the peak value of the signal component decided by the DS2 and the signal component which is decided by the DS1 and which becomes a reference. Therefore, the difference shows a negative value at any section where the relationship between the signal component by the DS2 and the signal component by the DS1 is reversed. In this example, since no negative value is defined in the signal level, "0" is shown in the drawing.

Below is given a more detailed description referring to Fig. 5. In S501, a maximum initial value of the brightness level is defined. As the maximum initial value of the brightness level, such a small value that can be immediately updated in the presence of any signal component having at least a certain magnitude should be set. In S502, the DS1 and the ADCLK are set to initial values, and a point which is chronologically slightly later than the initial value of the DS1 is set as the initial value of the DS2. Then, the image data obtained by the imaging element 101 is fetched. In S503, the brightness of the fetched image data in the DS2 detection region is calculated. In other words, the average value of the signal levels of the respective pixels in the DS2 detection region is calculated. Any of the pixels where the signal level shows at least a predetermined value is considered to be saturated. Therefore, the sampling should be performed exclusive of such a pixel. S503 is implemented by the brightness level detector 109. In S504, the calculated brightness is compared to the current maximum value of the brightness. When it is learnt that the calculated brightness is larger as a result of the comparison, the calculated brightness is set as the current maximum value. When it is learnt that the current maximum value of the brightness is larger, the maximum value of the brightness is not updated. S504 and S505 are implemented by the timing adjuster 110. In S506, the DS1 and the ADCLK remain fixed, and an instruction to shift the phase of the DS2 behind by one step is sent to the TG 106 from the timing adjuster 110. After the phase is shifted by one step, S502 - S506 are implemented again, and the brightness is compared to the maximum value of the brightness. This operation is repeated for one cycle, and the phase shown when the brightness is maximized is decided as the optimal phase of the DS2.

### Adjustment of DS1

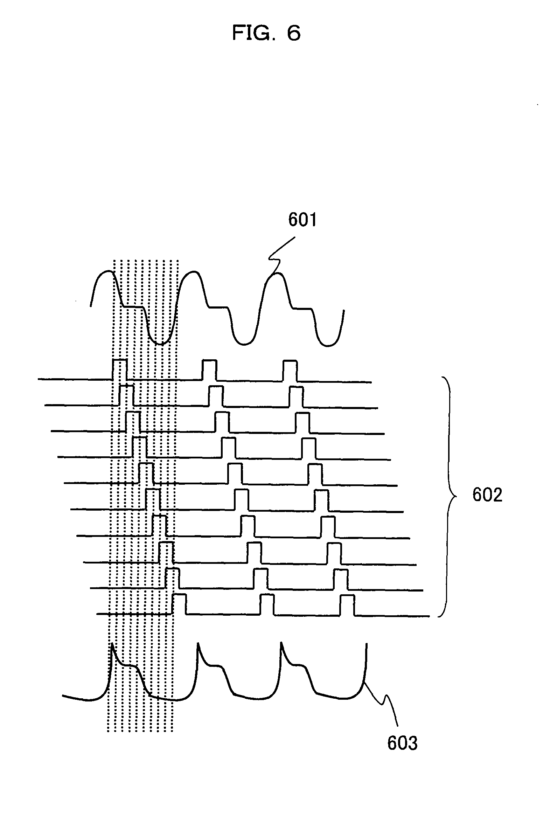

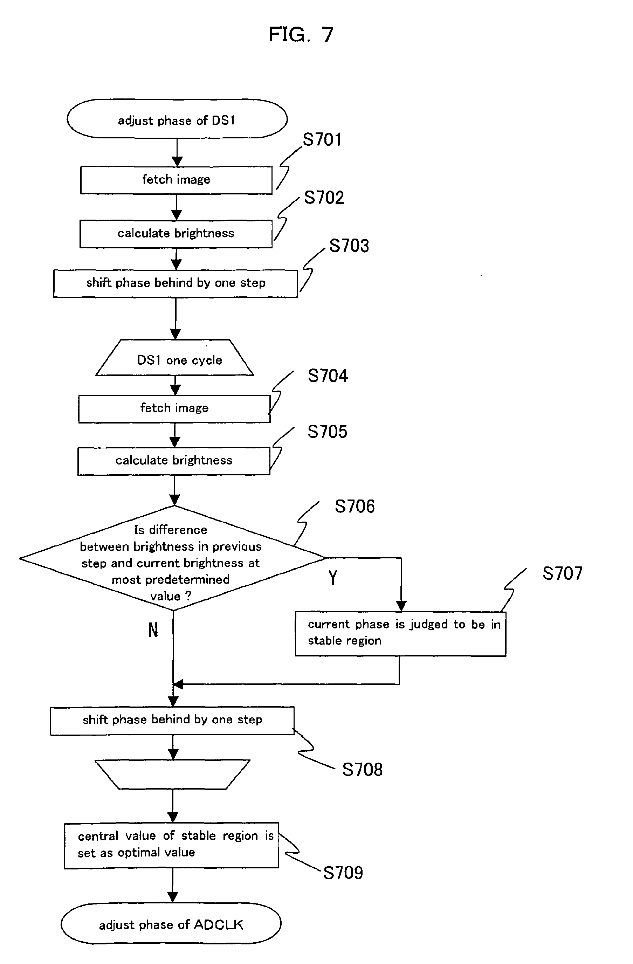

Referring to Figs. 6 and 7, the phase adjustment of the DS1 is described. Fig. 6 is a drawing illustrating a timing chart of the signal component used for the phase adjustment of the DS1. Fig. 7 is a drawing illustrating a detailed flow chat of the phase adjustment of the DS1. These drawings correspond to S303 and S304 shown in Fig. 3A.

In Fig. 6, 601 denotes an imaging element output signal, and 603 denotes a brightness signal. In the phase adjustment of the DS1, the brightness is also defined as an average value of the signal levels of the respective pixels in a partial region or an entire region (referred to as DS1 detection region) of the effective pixel region of the imaging element 101. When the imaging element output signal 601 is illustrated as in the drawing, the DS2 and the ADCLK are fixed, and the DS1 is shifted from its initial value like 602 as shown in the drawing. Then, the brightness signal 603 shows a significant drop, and becomes substantially constant in the reference period, and then, decreases again to finally reach 0 at a point where the DS1 corresponds to the DS2. The optimal value of the phase of the DS1 is decided so that the positive edge thereof is coincident with the center of an interval where the brightness signal 603 is substantially constant (referred to as a stable region).

Below is given a more detailed description referring to Fig. 7. In S701, the DS1 and the ADCLK are fixed to the initial values, and the DS2 is set to the optimal value decided according to the adjustment method described earlier, and then, the image data obtained by the imaging element 101 is fetched. In S702, the brightness of the fetched image data in the DS1 detection region is calculated. In other words, the average value of the signal levels of the respective pixels in the DS1 detection region is calculated. Any of the pixels where the signal level shows at least a predetermined value is considered to be saturated. Therefore, the sampling should be performed exclusive of such apixel. S702 is implemented by the brightness level detector 109. In S703, the DS2 and the ADCLK remain fixed, and the phase of the DS1 is shifted behind by one step. In S704, the image data obtained by the imaging element 101 is fetched. In S705, the brightness of the fetched image data in the DS1 detection region is calculated. In S706, a difference between the brightness calculated from the image data fetched at the phase of the DS1 earlier by one step and the brightness calculated from the image data detected at the current phase is obtained, and it is judged if the difference is at most a threshold value. When the difference is at most the threshold value, it is judged in S707 that the current phase is within the stable region. In S708, the DS2 and the ADCLK remain fixed, and the phase of the DS1 is shifted behind by one step. After the phase is shifted by one step, S704 - S708 are implemented again, and it is judged if the shifted phase is within the stable region. This operation is repeated for one cycle, and the range of the phases within the stable region is judged. Finally, in S709, a central value of the phases judged to be within the stable region is decided as the optimal phase of the DS1. In the case where it is found in the final judgment of the stable region that there are the phases judged to be within the stable region in at least two discontinuous intervals, the interval which is shorter may be ignored, or the interval where the phases judged to be within the stable region are continuous for the longest period of time may be judged as the stable region.

In the case where there is a large noise component, the stable region may be wrongly detected, or may not be detected at all if only the difference between the two pixels is used. In such a case, a filtering calculation, for example, may be adopted so that a difference between an average value of the brightness levels in at least three phases and the average value of the brightness levels in the current phase is calculated and compared to a threshold value. Alternatively, the dispersion of the brightness levels in at least three phases may be calculated and compared to a threshold value.

The initial values of the DS1 used in the flow charts of the DS1 and DS2 adjustments may be the same or different to each other. For example, the initial value of the DS1 in the flow chart of the DS2 adjustment may be set to a value near the reference period anticipated from the design specification, and the initial value of the DS1 used when the first image data is fetched in the flow chart of the DS1 adjustment may be set to a value within the reset period in order to detect a drastic fluctuation of the brightness signal.

### Adjustment of ADCLK

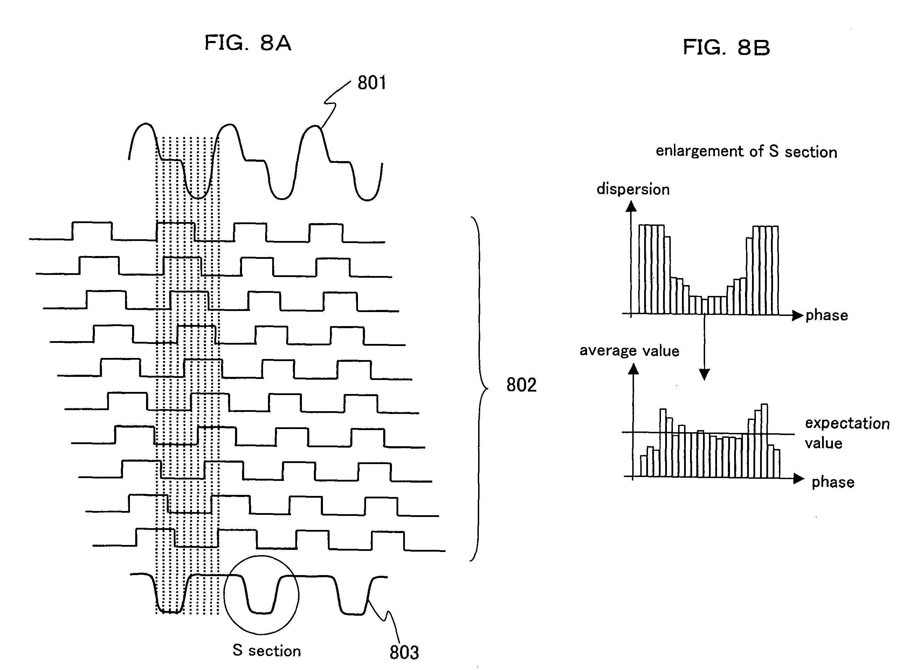

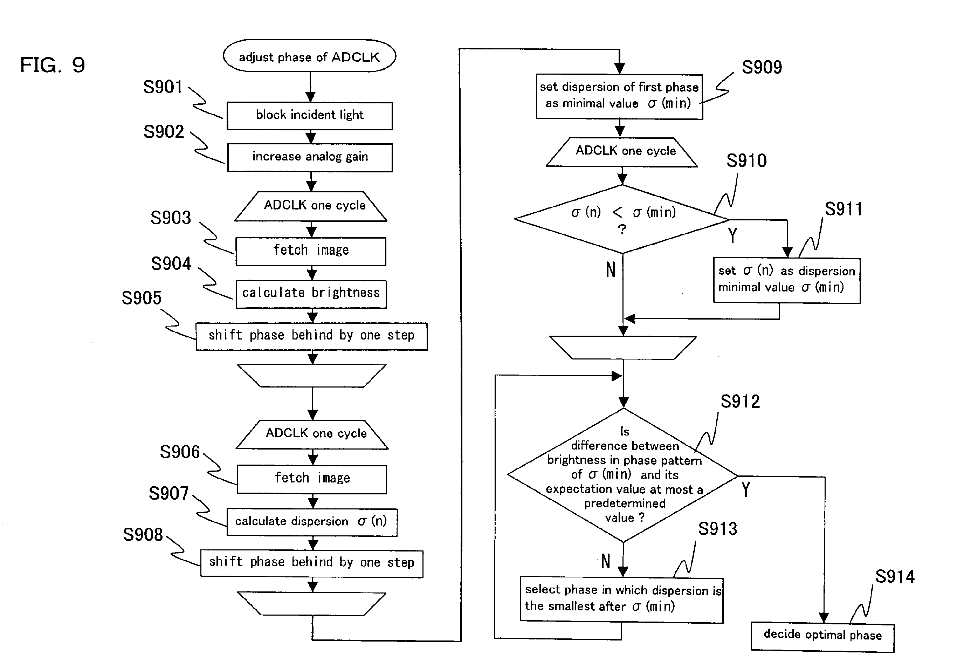

Referring to Figs. 8 and 9, the phase adjustment of the ADCLK is described. Fig. 8 is a drawing illustrating a timing chart of the signal component used for the phase adjustment of the ADCLK. Fig. 9 is a drawing illustrating a detailed flow chart of the phase adjustment of the ADCLK. These drawings correspond to S305 and S306 shown in Fig. 3A.

In Fig. 8, 801 denotes an imaging element output signal, and 803 denotes dispersion. The dispersion in this example is defined as the dispersion of the signal levels of the respective pixels in a partial region or an entire region (referred to as ADCLK detection region) in an effective pixel region and/or an OB pixel region in a state where the imaging element 101 is light-blocked. In other words, the dispersion denotes a value indicating the degree of the variability of the signal levels in the respective pixels, and it is effective to use a signal in a constant light-blocking state as the ideal circumstances. Therefore, it is necessary for the ADCLK to be set so that the dispersion is reduced. The brightness and the dispersion may be calculated in the same pixel region or different pixel regions. When the imaging element output signal 801 is shown as in the drawing, the dispersion shows concave shapes as shown in 803 in the drawing when the ADCLK is shifted from the initial value as shown in 802 in the drawing while the DS1 and the DS2 are fixed to the optimal values. The phase of the ADCLK should be decided so that the dispersion 803 shows a minimum value; however, the dispersion may be minimized at a wrong position owing to some factor. Therefore, the brightness in the ADCLK detection region is compared to a predetermined expectation value at the phase where the dispersion 803 was found to be minimal. There is an expectation value as the DC offset in the design specification because the OB pixel region is light-blocked. When the brightness in the ADCLK detection region is largely different to the expectation value, the ADCLK cannot be said to be optimal. Therefore, in the case where a difference between the brightness and the predetermined expectation value is at most a certain threshold value in the phase where the dispersion 803 is judged to show a smallest value, the phase is decided as the optimal value of the ADCLK. In the case the difference between the brightness and the predetermined expectation value is at least the certain threshold value, it is judged if a difference between the brightness and the predetermined expectation value is at most the threshold value in the phase where the dispersion 803 shows a second smallest value. The foregoing operation is repeated, and the minimal value of the ADCLK is decided.

A possible method of light-blocking the imaging element 101 is toblock an incident light by closing a mechanical shutter. In the case where the OB pixel region, which is already light-blocked, is used as the ADCLK detection region, it is unnecessary to close the mechanical shutter.

Below is given a further detailed description referring to Fig. 9. In Step S901, the mechanical shutter is closed so that the incident light is blocked. This step is omitted in the case where the OB pixel region is used as the ADCLK detection region. In Step S902, an analog gain is increased in order to amplify only the noise component. In Step S903, the DS1 and DS2 are set to the decided optimal values, and the ADCLK is set to the initial value, and then, the image data obtained by the imaging element 101 is fetched. In S904, the brightness of the fetched image data in the ADCLK detection region is calculated, that is, the average value of the signal levels of the respective pixels in the ADCLK detection region is calculated. S904 is implemented by the brightness level detector 109. In S905, the DS1 and the DS2 remain fixed, and the phase of the ADCLK is shifted behind by one step. After the shift of the phase by one step, S903 - S904 are implemented again. This operation is repeated for one cycle so that the brightness by each phase is calculated. The calculated brightness is temporarily stored in a memory. In S906, the DS1 and the DS2 are set to the decided optimal values, and the ADCLK is set to the initial value, and then, the image data obtained by the imaging element 101 is fetched again. In S907 dispersion σ (n) of the fetched image data in the ADCLK detection region is calculated. n is an arbitrary positive number, and denotes the number of settable phase states within one cycle. In other words, the dispersion of the signal levels of the respective pixels in the ADCLK detection region is calculated. S907 is implemented by the dispersion calculator 108. In S908, the DS1 and the DS2 remain fixed, and the phase of the ADCLK is shifted behind by one step. After the shift of the phase by one step, S906 - S907 are implemented again. This operation is repeated for one cycle so that the dispersion for each phase is calculated. The calculated dispersion is temporarily stored in a memory. In the description so far, the brightness distribution and the dispersion distribution are calculated using image data separately fetched; however, they may be calculated using the same image data.

Accordingly, the brightness distribution and the dispersion distribution for each phase are stored in the memory. Next, the data stored in the memory is used to obtain optimal ADCLK. In Step S909, the dispersion σ (1) of the first phase is set as a minimal value σ (min) . In Step S910, σ (n) is set as the dispersion of the second phase and later phases, and compared to σ (min). When σ (n) is smaller, σ (n) is set as a new minimal value σ (min) in Step S911. S910 is repeated until the last phase, and the phase in which the dispersion is minimal can be obtained. In Step S912, it is judged if a difference between the brightness in the phase in which the dispersion is minimal and an expectation value thereof determined by the design specification is at most a predetermined threshold value. When the difference is at most the predetermined threshold value, the phase at the time is decided as the optimal phase of the ADCLK in S914. When the difference is larger than the predetermined threshold value, S913 is implemented for the phase in which the dispersion shows the smallest value after the phase of σ (min) . S912 and S913 are repeated until the optimal phase is decided.

According to the manner described so far, the phases of the DS1, DS2 and ADCLK can be automatically adjusted. Accordingly, the phases of the pulses outputted from the TG 106 can be automatically adjusted when the imaging element itself is exchanged, or the characteristics of the imaging element change due to external factors (temperature, deterioration over time, and the like). Further, the automatic adjustment can be very accurate since the phases of the pulses are adjusted in the individual manners in view of the characteristics of the respective pulses.

The dispersion calculator 108, brightness level detector 109, and timing adjuster 110, which are the constituent elements characterizing the present invention, can be configured as hardware circuits, or can be realized as software in a microcomputer. In the case where hardware circuits constitute the dispersion calculator 108 and the brightness level detector 109, the present invention can be realized without any burden to CPU. The adjustment flow charts do not need to be the same as the steps shown in Fig. 3, and can be changed.

The preferred embodiment described so far is merely an example, and it is needless to say that various modifications are possible other than modified embodiments described below.

### MODIFIED EMBODIMENT 1

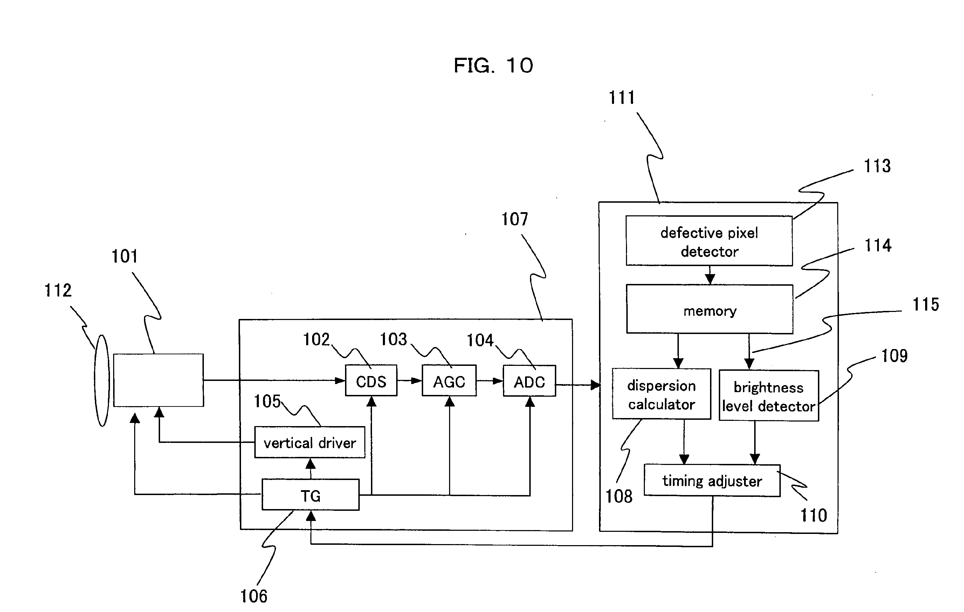

Fig. 10 is a block diagram illustrating an overall constitution of a digital camera according to a modified embodiment 1 of the present invention, wherein any defective pixel is not used in the pulse automatic adjustment. The present modified embodiment is characterized in that a defective pixel detector 113 and a memory 114 are provided. 115 denotes a defective pixel address.

The imaging element 101, such as CCD or MOS sensor, often includes a defective pixel attributable to the manufacturing process. In the defective pixel, the signal level is often fixed to around a maximum value or a minimum value irrespective of an amount of the incident light. Therefore, it is desirable that the value of the defective pixel, even if it stays within the detection regions of the respective pulses, is not used for the phase adjustment. In the present modified embodiment, the defective pixel is detected by the defective pixel detector 113, and the address of the defective pixel is stored in the memory 114 in advance. Thus constituted, the defective pixel cannot be used for the phase adjustment, which improves the accuracy of the phase adjustment.

The defective pixel can be detected in various manners. For example, charges are stored for a certain period of time when the digital camera is activated with the mechanical shutter being closed, and a pixel in which the signal level is at least a predetermined threshold value is detected as the defective pixel. It is unnecessary for the memory 14 to retain the addresses of all of the defective pixels as far as the memory 114 can store the addresses of a predetermined number of defective pixels.

### MODIFIED EMBODIMENT 2

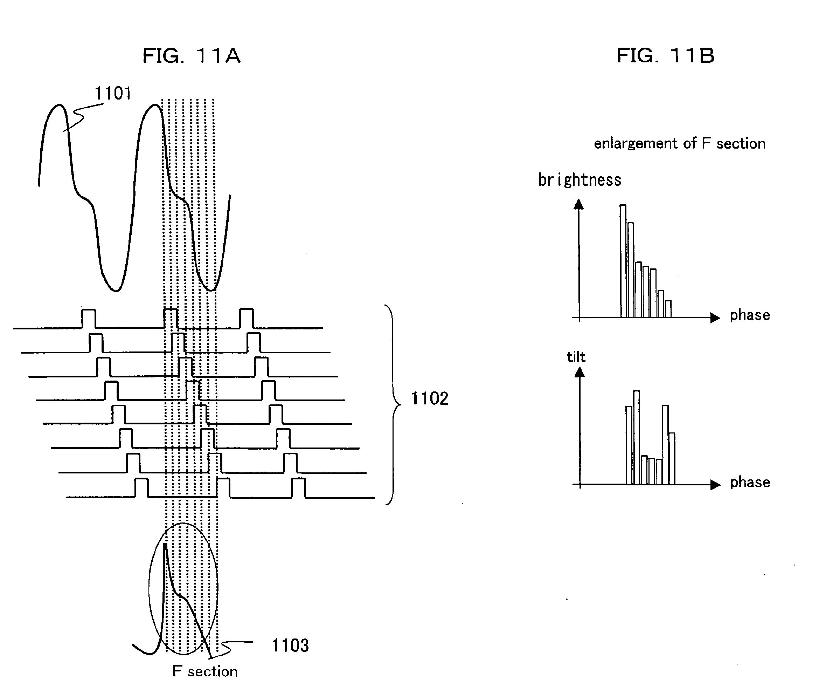

When the DS1 is set, the region where the difference in comparison to the adjacent pixel is at most the predetermined threshold value is set as the stable region, and the phase adjustment is performed so that the positive edge of the DS1 is coincident with the center of the stable region. However, as shown in Fig. 11, the phase period corresponding to the stable region may not be detected in the case where a signal quality is poor. Even in such a case, the region where the tilt of the signal component is relatively small can be regarded as a pseudo stable region. In the modified embodiment 2, therefore, when it is notpossible to detect the stable region, the threshold value is increased so that the region where the signal component is tilted through a certain degree is detected as the pseudo stable region. In the case where the pseudo stable region continues for a certain period of time, the phase of the DS1 is adjusted so that the positive edge is coincident with the center of the region.

In order to detect a stable region, it is not always necessary to obtain the difference in comparison to the adjacent pixel. A first and a second stable region may be detected in different manners. For example, a difference between the brightness average value in at least three phases and the brightness average value in the current phase may be calculated and compared to a threshold value which is set to a relatively small value during the first detection, while a difference between the adjacent two pixels may be calculated and compared to a threshold value which is set to a relatively large value during the second detection. The point of the present modified embodiment is to moderate the conditions for the detection so that the stable region can be easily detected in the second detection. As a result, the DS1 can be set even when the signal quality is poor.

### MODIFIED EMBODIMENT 3

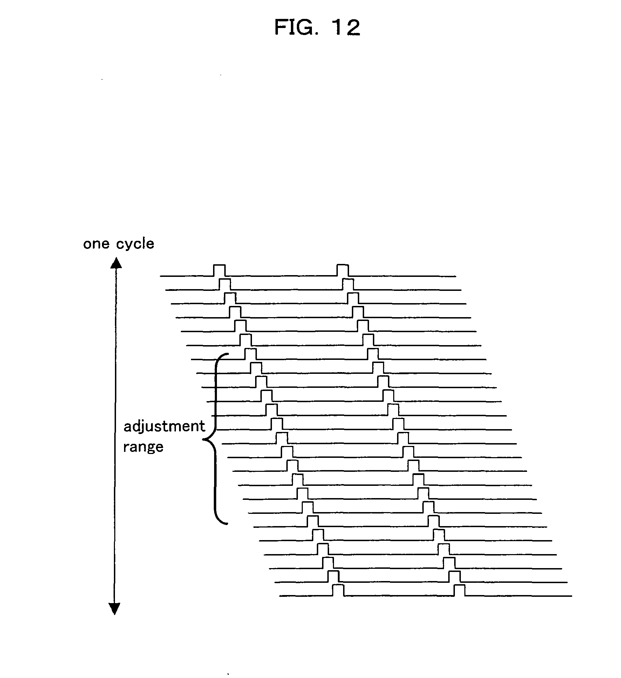

In the description of the preferred embodiment, the phases were shifted for one cycle in order to adjust the phases of the DS1, DS2 and ADCLK. However, in the case where the design specification of the imaging element is previously known, the targeted adjustment phases of the respective pulses can be anticipated to a certain degree. Therefore, the adjustment range can be narrower than one cycle period as shown in Fig. 12. As a result, an amount of time necessary for the phase adjustment can be shortened.

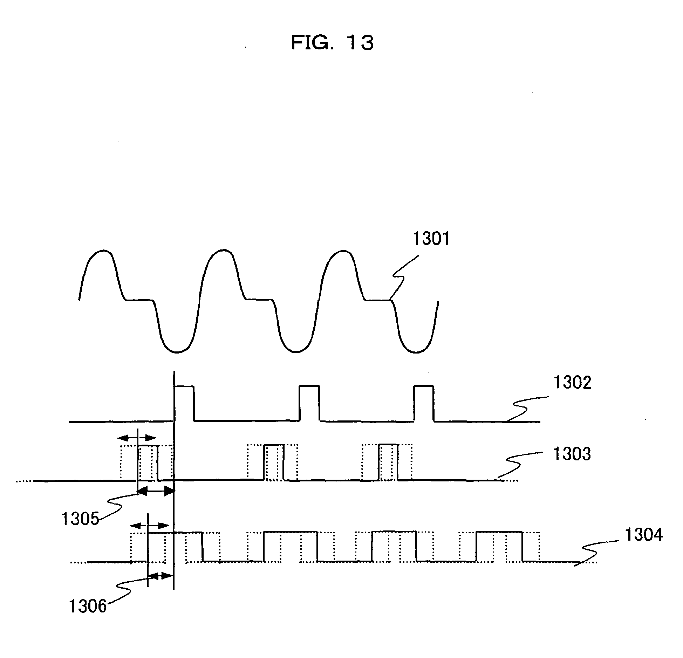

In the present preferred embodiment, the DS2 is adjusted first. When the phase of the DS2 is adjusted, the targeted adjustment phases of the DS1 and the ADCLK can be predicted. In Fig. 13, when the phase of DS2 (1302) is decided from an imaging element output signal 1301, it is predicted that the phases of DS1 (1303) and ADCLK (1304) should be adjusted to phases in the neighborhood of a phase having an optimal phase difference in terms of the design specification, and the phases of the DS1 (1303) and the ADCLK (1304) are adjusted to phases within a predetermined rage with the phase as its center. 1305 denotes a difference between the optimal phases of the DS1 and the DS2 , and 1306 denotes a difference between the optimal phases of the DS2 and the ADCLK. Based on the phase of a pulse previously obtained, the phases of the other pulses are predicted. As a result, the adjustment range can be narrowed, and the amount of time necessary for the phase adjustment can be largely reduced.

Unless the accuracy is strictly observed, it is unnecessary to adjust the phases of all of the pulses, DS1, DS2 and ADCLK. The phases of other pulses may be obtained using a fixed phase from the obtained phase of the first pulse, or the phase of the third pulse may be decided from the obtained phase of the second pulse.

When the phase adjustment is necessary due to the phase shift resulting from such a factor as temperature changes or deterioration over time, for example, it is assumed that the optimal phases are near the phases adjusted the last time. Therefore, the phase adjustment result may be stored in the memory every time it is obtained so that the phases are adjusted in such an adjustment range that includes only phases near the phases adjusted the last time.

### MODIFIED EMBODIMENT 4

When the phases of the DS1 and the DS2 are adjusted, their optimal phases are judged from the magnitude of the brightness. Therefore, the phase adjustment becomes difficult unless at least a certain level of brightness is obtained. A digital camera for medical use, for example, is often provided with an auxiliary light such as LED, and the auxiliary light is preferably used when the peak brightness is found to be at most a predetermined value during an ordinary phase adjustment.

### MODIFIED EMBODIMENT 5

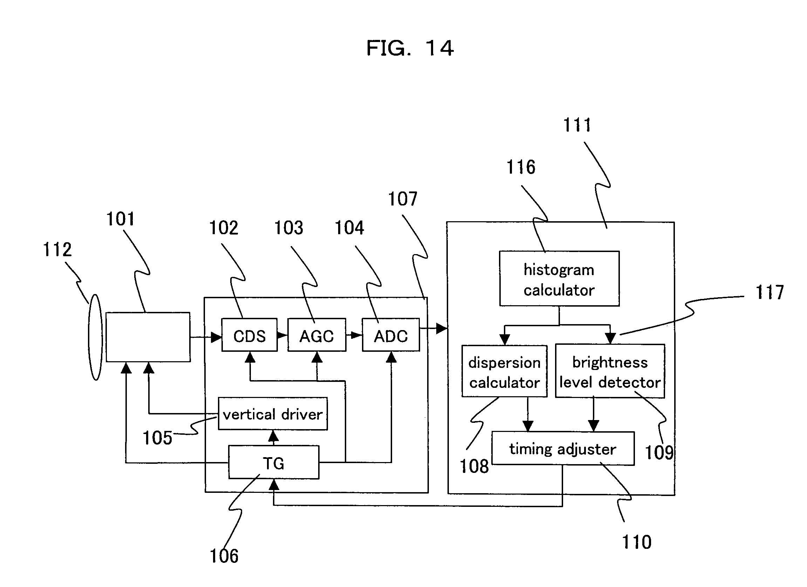

The histogram used in the present invention is described. Fig. 14 illustrates a constitution of an automatic adjusting apparatus in which a histogram calculator is used.

It is assumed that input signals to the histogram calculator 116 are signals of R pixel, Gr pixel, B pixel and Gb pixel outputted from the imaging element 101. It is also assumed that the histogram calculator 116 can designate a pixel region used for the calculation, a range of the input signals for which the histogram is calculated and the number of intervals into which the range is divided, and the histogram calculator 116 also can selectively change the signal for which the histogram is calculated.

The histogram calculator 116 counts the number of times the respective signals appear in each interval, and outputs the number of times the signals appear in each interval when the calculation of all of the signals in the designated pixel region is completed. This corresponds to 117 shown in Fig. 7.

The dispersion calculator 108 and the brightness level detector 109 can both calculate the variability value and the brightness level from the range of the signals and the number of times the signals appear.

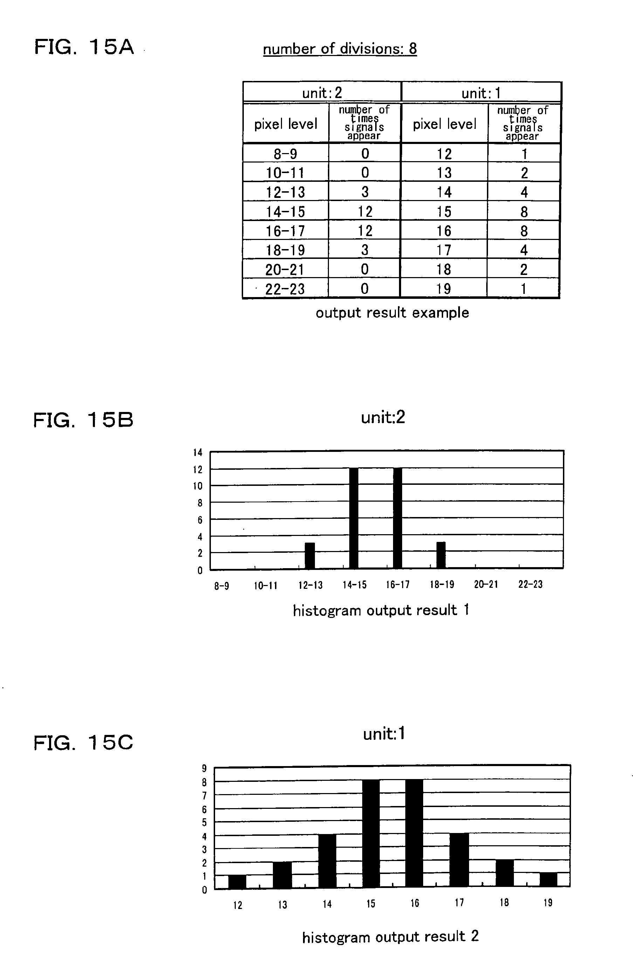

Fig. 15 illustrates an application used when the variability is calculated using a histogram calculating block. As shown in Fig. 15B, a large range for which the histogram is calculated is set, and it is judged from a histogram output result in which range the input signal is included. As shown in Fig. 15C, the range of the input signal is thereafter changed into a value suitable for automatic adjustment. Automatic adjustment may be performed in this manner. Fig. 15A shows the output results of Figs. 15B and 15C in a form of a table.

The accuracy of the automatic adjustment varies depending on the combination of the signal ranges and the intervals. Therefore, suitable values are preferably set depending on a system used.

Adigital camera which is currently available is provided with a function for displaying an image histogram after image processing. Therefore, when the relevant block is utilized, it is unnecessary to additionally provide the histogram calculator. The input signals in the case where the relevant block is utilized are not the signals outputted from the imaging element, but image-processed signals. Therefore, it is necessary to change respective parameters in the image processing to values suitable for the automatic adjustment.

The structure of the histogram calculator 116 and the constitution wherein the histogram calculator 116 is utilized are not limited to the foregoing description.

When the histogram calculator 116 is utilized for the automatic adjustment, the constitution of the present invention can be realized without SDRAM.

### MODIFIED EMBODIMENT 6

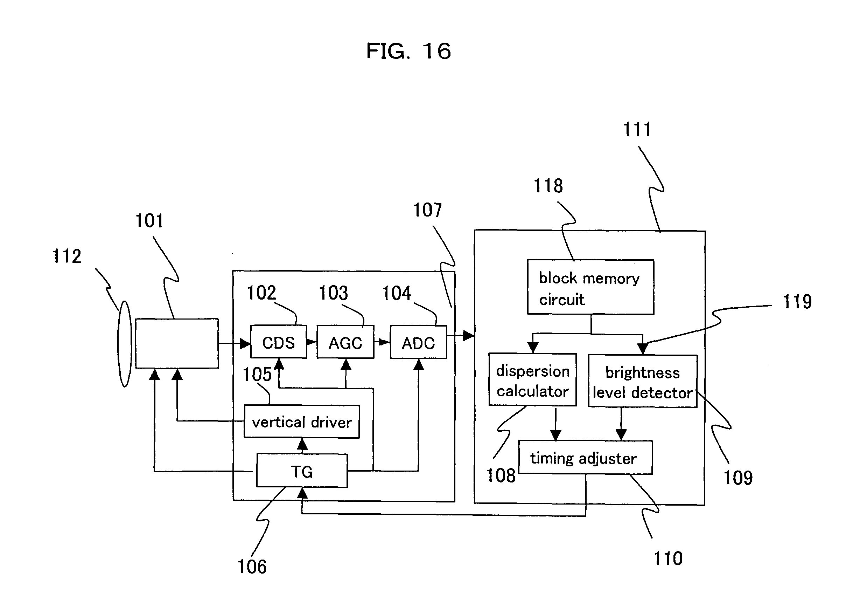

Fig. 16 illustrates a constitution of an automatic adjusting apparatus in which a block memory is used. A block memory circuit 18 is provided in order to realize such functions as exposure adjustment and auto white balance in a digital still camera. Input signals to the block memory circuit 118 used in the present invention are signals of R pixel, Gr pixel, B pixel and Gb pixel outputted from the imaging element 101. In the block memory circuit 118, blocks constitute the pixel region targeted for the calculation, and horizontal n x vertical m pixels constitute one block. The data of each pixel color in one block is integrated, and the integration result for the horizontal i x vertical j blocks is outputted while an image on one page is fetched (frame) . After the integration of the i blocks is completed, the integration values of R pixel, Gr pixel, B pixel and Gb pixel for the i blocks are outputted.

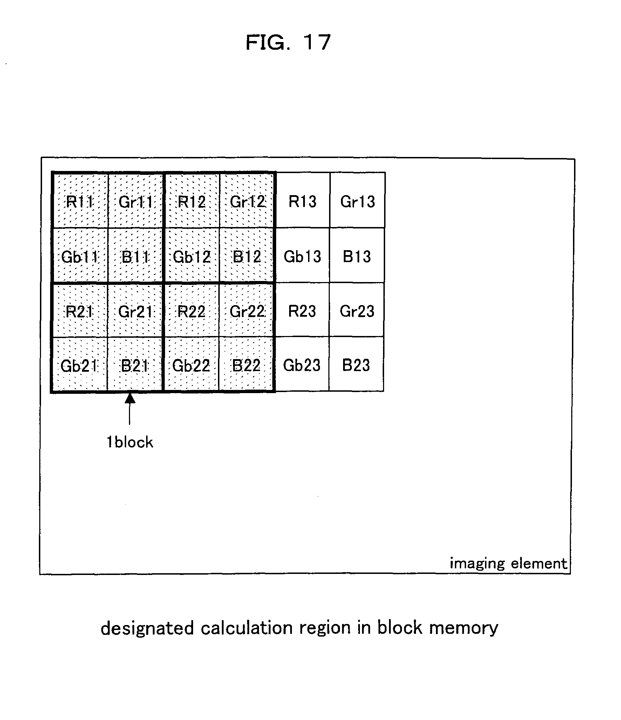

Fig. 17 illustrates an example of a block memory in which one block size is 2 x 2 and the number of the blocks is 2 x 2. The size of one block and the number of the blocks can be adjusted to appropriate values when the automatic adjustment is actually performed. When the size of one block is reduced, data thereby obtained can be more accurate.

In the dispersion calculator 108 and the brightness level detector 109 of the automatic phase adjusting apparatus, an output result 119 of the block memory circuit 118 is utilized in place of obtaining pixel data from the SDRAM. As a result, the variability value and the brightness level can be obtained without the SDRAM.

The automatic adjustment may be performed such that the calculating region is changed for each frame.

### MODIFIED EMBODIMENT 7

Below is described an modified embodiment comprising a threshold value detection block which counts the numbers of input signal levels in a designated pixel region which are at least a first threshold value and at most a second threshold value. Fig. 18 illustrates a constitution according to the modified embodiment 7.

To a threshold value detector 120 are inputted signals of R pixel, Gr pixel, B pixel and Gb pixel outputted from the imaging element 101. The threshold value detector 120 counts, for each pixel color, the respective numbers of the signal levels of the respective pixels in a designated pixel region which are at least the first threshold value and at most the second threshold value. When the two threshold values are set to parameters suitable for the automatic adjustment, an output result 121 of the threshold value detector 120 can be used in place of the variability value.

A pixel region is set in Fig. 19A. Focusing on the R pixel, for example, the total number of the R pixels in the designated region can be obtained from the setting of the pixel region. In the threshold value detection block, as shown in Fig. 19B, detection is made to see if the signals levels are within or beyond the range set by the two threshold values, and the detection result is outputted. When a large number of signal levels is outside the range, it can be judged that the variability is large.

According to the present modified embodiment, the automatic phase adjusting apparatus can be realized without the SDRAM.

### MODIFIED EMBODIMENT 8

Below is described a modified embodiment wherein a frequency detection block is used for the automatic adjustment. Fig. 20 illustrates a constitution of a modified embodiment 8.

Assume that to a frequency component detecting circuit 122, which is a frequency detector, are inputted signals of R pixel, Gr pixel, B pixel and Gb pixel outputted from the imaging element 101. Aplurality of blocks targeted for the calculation can be designated. In the frequency component detecting circuit 122, the inputted signal and the signal of the adjacent pixel are supplied to HPF (High Pass Filter) so that edge information of a high frequency component is obtained and a frequency component 123 in which an edge peak value is integrated is outputted for each calculation block.

The ADCLK is adjusted with the imaging element 101 being light-blocked so that its variability is reduced. When the peak value of the high frequency region is large in the light-blocking state, it can be judged that the variability is large. Thus, the variability can be obtained when the frequency component detecting circuit 122 is used.

The frequency component detecting circuit 122 is often mounted on the DSP 111 in order mainly to realize AF (Auto Focus) . When the relevant block is used, it is unnecessary to newly add a processing block. When the automatic adjustment is performed, it is preferable to set parameters suitable not for the AF but for the automatic adjustment.

### MODIFIED EMBODIMENT 9

The frequency component detecting circuit 122 may be utilized so as to identify a low-frequency component region from the pixel regions so that the brightness level inside the region is calculated.

In the low-frequency component region, noise components are few. Therefore, the brightness level can be very accurately calculated according to the present preferred embodiment.

### MODIFIED EMBODIMENT 10

While the image data is being fetched in the automatic phase adjusting apparatus, the supply of clocks to the dispersion calculator 108, brightness level detector 109, and timing adjuster 110 is suspended. Further, power supply to a vertical transfer driver which generates an imaging element control signal is suspended except when the image data is fetched.

### MODIFIED EMBODIMENT 11

In a digital camera for medical use, an imaging element or a cable which connects the imaging element to a signal processor may be exchanged after the digital camera is manufactured. The signal processor comprises an analog front end 107, a TG 106 and a DSP 111. Since the cable also undergoes signal delays, an amount of the signal delays may change when the cable is exchanged or the cable length is changed. Therefore, the phases are preferably adjusted every time the cable is exchanged, so that the pulses can be generated at the phases optimal for the imaging element and the cable which are currently used.

### INDUSTRIAL APPLICABILITY

According to the present invention, pulses used for obtaining an image in a digital camera can be automatically timing-adjusted. Therefore, the present invention can be applied to at least a digital camera.

## Claims

1. An automatic phase adjusting apparatus, wherein a digital imaging signal obtained when an image data obtained by an imaging element is converted into a digital value for each pixel is inputted, and phases of pulses used for an imaging operation are adjusted based on the inputted digital imaging signal, comprising:
a brightness level detector for calculating a brightness level of the digital imaging signal in relation to a plurality of pixels in a first pixel region;
a variability calculator for calculating a variability value indicating signal variability of the digital imaging signals for each pixel in relation to a plurality of pixels in a second pixel region; and
a timing adjuster for adjusting the phases of the pulses in accordance with calculation results obtained by the brightness level detector and the variability calculator.

2. The automatic phase adjusting apparatus as claimed in Claim 1, wherein the brightness level calculated by the brightness level detector is an average value of signal levels of the digital imaging signal in the first pixel region.

3. The automatic phase adjusting apparatus as claimed in Claim 2, wherein
the brightness level detector obtains an average value in the digital imaging signal in the firstpixel region exclusive of a pixel having a signal level at least a predetermined signal level.

4. The automatic phase adjusting apparatus as claimed in Claim 1, wherein
an auxiliary light is used in the case where the brightness level calculated by the brightness level detector is at most a predetermined value.

5. The automatic phase adjusting apparatus as claimed in Claim 1, wherein
the variability calculator calculates a variability value in a state where an incident light is blocked.

6. The automatic phase adjusting apparatus as claimed in Claim 1, further comprising a defective pixel detector for detecting a defective pixel in the imaging element, wherein
the brightness level detector calculates the brightness level exclusive of the defective pixel detected by the defective pixel detector, and
the variability calculator calculates the variability value exclusive of the defective pixel detected by the defective pixel detector.

7. The automatic phase adjusting apparatus as claimed in Claim 6, further comprising a memory in which a position of the defective pixel detected by the defective pixel detector is stored.

8. A digital camera comprising:
an imaging element;
a CDS for deciding a signal level for each pixel by executing correlated double sampling to an imaging signal outputted from the imaging element;
an AGC for adjusting an amplitude of the imaging signal outputted from the CDS;
an AD converter for obtaining a digital imaging signal by converting the imaging signal in which the amplitude is adjusted by the AGC into a digital value;
the automatic adjusting apparatus as claimed in Claim 1 to which the digital imaging signal converted by the AD converter is inputted; and
a TG for generating a pulse used for obtaining an image based on the phases adjusted by the automatic adjusting apparatus as claimed in Claim 1.

9. An automatic phase adjustingmethod for adjusting at least one of phases of a first pulse for detecting a level of an imaging signal outputted from an imaging element, a second pulse for detecting a signal level used as a reference in correlated double sampling, and an AD clock signal inputted to an AD converter, including:
a step of detecting a first phase where a brightness level is maximized by changing a phase of the first pulse in a state where the second pulse and the AD clock signal remain fixed to respective initial values; and
a step of setting the detected first phase as the phase of the first pulse.

10. The automatic phase adjusting method as claimed in Claim 9, further including:
a step of detecting a stable region where the variability of the brightness levels is less by changing a phase of the second pulse in a state where the phase of the first pulse is fixed to the set first phase and the AD clock signal is fixed to the initial value; and
a step of setting a center of the detected stable region as a second phase and setting the second phase as the phase of the second pulse.

11. The automatic phase adjusting method as claimed in Claim 10, further including:
a step of detecting a third phase by fixing the phase of the first pulse to the set first phase and fixing the phase of the second pulse to the set second phase and further changing the AD clock signal in a state where an incident light is blocked, and
a step of setting the detected third phase as a phase of the AD clock signal.

12. The automatic phase adjusting method as claimed in Claim 11, wherein
the brightness level is an average value of signal levels of a digital imaging signal in a predetermined pixel region.

13. The automatic phase adjusting method as claimed in Claim 12, wherein
a difference in the brightness level with an adjacent phase is obtained while the phase of the second pulse is being changed, and the stable region is determined in the case where the difference is at most a first threshold value in the step of detecting the stable region.

14. The automatic phase adjusting method as claimed in Claim 13, wherein
the first threshold value is increased in the case where the stable region cannot be detected.

15. The automatic phase adjusting method as claimed in Claim 11, wherein
dispersion of signal levels in a predetermined pixel region is calculated while the phase of the AD clock signal is being changed, and a phase where the calculated dispersion is minimal is set as the third phase in the step of detecting the third phase.

16. The automatic phase adjusting method as claimed in Claim 15, wherein
the step of detecting the third phase includes:
a step of calculating the dispersion of the signal levels in the predetermined pixel region while changing the phase of the AD clock signal; and
a step of calculating the brightness level which is an average value of the signal levels in the predetermined pixel region while changing the phase of the AD clock signal, and
a phase where the dispersion is minimal is set as the thirdphase in the case where a difference between the brightness level and a predetermined expectation value is at most a second threshold value in the phase where the dispersion is minimal.

17. The automatic phase adjusting method as claimed in Claim 16, wherein
the difference between the brightness level and the predetermined expectation value is compared to the second threshold value in a phase where the dispersion shows a second smallest value in the case where the difference between the brightness level and the predetermined expectation value is larger than the second threshold value in the phase where the dispersion is minimal, and
the phase where the dispersion shows the second smallest value is set as the third phase in the case where the difference is at most the second threshold value.

18. The automatic phase adjusting method as claimed in Claim 11, wherein
at least one of a range where the phase of the first pulse is changed, a range where the phase of the secondpulse is changed and a range where the phase of the AD clock signal is changed is restricted to a range shorter than one cycle.

19. The automatic phase adjusting method as claimed in Claim 18, wherein
when the first phase is set, at least one of the range where the phase of the second pulse is changed and the range where the phase of the AD clock signal is changed is restricted to a range shorter than one cycle based on the set first phase.

20. The automatic phase adjusting method as claimed in Claim 18, wherein
the adjusted first phase, second phase and third phase are stored in the case where the phase adjustment was performed before, and at least one of the range where the phase of the first pulse is changed, the range where the phase of the second pulse is changed and the range where the phase of the AD clock signal is changed is restricted to a range shorter than one cycle based on the stored phases.

21. The automatic phase adjusting device as claimed in Claim 1, wherein
the variability value is dispersion.

22. The automatic phase adjusting device as claimed in Claim 1, further comprising a histogram calculator for calculating distribution of a predetermined signal.

23. The automatic phase adjusting device as claimed in Claim 22, wherein
at least one of a R signal, a Gr signal, a B signal, and a Gb signal outputted from the imaging element, an average signal obtained from the Gb signal and Gr signal, the brightness level generated from the signals outputted from the imaging element, the brightness level obtained after data of the imaging element is image-processed, a R component, a G component and B component can be selected as the predetermined signal.

24. The automatic phase adjusting device as claimed in Claim 23, wherein
the variability calculator executes the calculation based on distribution data outputted from the histogram calculator.

25. The automatic phase adjusting device as claimed in Claim 23, wherein
the brightness level detector executes the calculation based on distribution data outputted from the histogram calculator.

26. The automatic phase adjusting device as claimed in Claim 22, wherein
the histogram calculator can change a pixel region subjected to the histogram calculation.

27. The automatic phase adjusting device as claimed in Claim 22, wherein
the histogram calculator can change a data range and the number of divided intervals subjected to the histogram calculation.

28. The automatic phase adjusting device as claimed in Claim 26, wherein
the variability calculator and the brightness level detector change parameters of the histogram calculator into values suitable for the automatic adjustment so as to perform automatic adjustment.

29. The automatic phase adjusting device as claimed in Claim 27, wherein
the variability calculator and the brightness level detector change parameters of the histogram calculator into values suitable for the automatic adjustment so as to perform automatic adjustment.

30. The automatic phase adjusting device as claimed in Claim 1, further comprising a block memory for outputting a result obtained when predetermined data in a designated pixel region is integrated or averaged.

31. The automatic phase adjusting device as claimed in Claim 30, wherein
the predetermined data denotes color-specific data of pixels outputted from the imaging element, and at least one of the data can be selectively outputted.

32. The automatic phase adjusting device as claimed in Claim 31, wherein
the variability calculator executes the calculation based on an output result of the block memory.

33. The automatic phase adjusting device as claimed in Claim 31, wherein
the brightness level detector executes the calculation based on an output result of the block memory.

34. The automatic phase adjusting device as claimed in Claim 1, further comprising a threshold value detector for counting and outputting the numbers of pixel data in a designated pixel region which are at least a first threshold value and at most a second threshold value, wherein
the dispersion calculator executes the calculation based on count values outputted from the threshold value detector.

35. The automatic phase adjusting device as claimed in Claim 1, further comprising a frequency detector for detecting a frequency component in a designated pixel region.

36. The automatic phase adjusting device as claimed in Claim 35, wherein
the variability calculator executes the calculation based on information of the frequency component outputted from the frequency component detector.

37. The automatic phase adjusting device as claimed in Claim 35, wherein
a low-frequency region of an image is searched based on an output of the frequency detector, the low-frequency region is set as the first pixel region, and the phase adjustment is then performed.

38. The automatic phase adjusting device as claimed in Claim 1, wherein
the variability calculator is configured as a hardware circuit.

39. The automatic phase adjusting device as claimed in Claim 1, wherein
supply of clocks to the variability calculator, the brightness level detector, and the timing adjuster is suspended while the image data is being fetched.

40. The automatic phase adjusting device as claimed in Claim 1, wherein
power supply to a vertical transfer driver which generates an imaging element control signal is suspended except when the image data is fetched.

41. The automatic phase adjusting method as claimed in Claim 11, wherein
at least one of the phases of the first pulse, the second pulse and the AD clock signal is adjusted when the imaging element is exchanged.
